# EUROPEAN PATENT SPECIFICATION

(11) **EP 3 190 769 B1**
(45) Date of publication and mention of the grant of the patent: **28.10.2020**
(21) Application number: 16206471.1
(22) Date of filing: 22.12.2016
(51) Int. Cl.: H04L 29/06

(54) **A SYSTEM AND METHOD FOR DETECTING MALICIOUS RE-PROGRAMMING OF A PLC IN SCADA SYSTEMS USING TIME DECEPTION**
SYSTEM UND VERFAHREN ZUR ERKENNUNG VON BÖSARTIGEN UMPROGRAMMIERUNGEN EINER PROGRAMMIERBAREN STEUERUNG IN SCADA-SYSTEMEN MIT ZEITTÄUSCHUNG
PROCÉDÉ ET SYSTÈME PERMETTANT DE DÉTECTER UNE REPROGRAMMATION MALVEILLANTE DE PLC DANS DES SYSTÈMES SCADA À L'AIDE D'UNE DÉCEPTION TEMPORELLE

(30) Priority: 24.12.2015 IL 24334315
(43) Date of publication of application: 12.07.2017
(73) Proprietor: Deutsche Telekom AG, 53113 Bonn (DE)
(72) Inventor: SHABTAI, Asaf, 7684200 Hulda (IL); PUZIS, Rami, 7748707 Ashdod (IL); SILBERSCHLAG, Shimon, 7175995 Modiin (IL); ROSHANDEL, Mehran, 13591 Berlin (DE)
(74) Representative: Maiwald Patent- und Rechtsanwaltsgesellschaft mbH

(56) References cited:
- US-B1- 8 667 589
- WEI GAO ET AL: "On SCADA control system command and response injection and intrusion detection", ECRIME RESEARCHERS SUMMIT (ECRIME), 2010, IEEE, 18 October 2010 (2010-10-18), pages 1-9, XP031912890, DOI: 10.1109/ECRIME.2010.5706699 ISBN: 978-1-4244-7760-9
- STEPHEN PAPA ET AL: "A transfer function based intrusion detection system for SCADA systems", HOMELAND SECURITY (HST), 2012 IEEE CONFERENCE ON TECHNOLOGIES FOR, IEEE, 13 November 2012 (2012-11-13), pages 93-98, XP032330343, DOI: 10.1109/THS.2012.6459831 ISBN: 978-1-4673-2708-4
- JONATHAN POLLET: "Innovative Defense Strategies for Securing SCADA & Control Systems", TECHNICAL PAPERS OF ISA, V 459, ISA EXPO 2005 TECHNICAL CONFERENCE TECHNICAL PAPERS COLLECTION, 2005, page 14PP, XP002770348,
- "Chapter 7: Establishing Secure Enclaves; Chapter 8: Exception, Anomaly, and Threat Detection; Chapter 9: Monitoring Enclaves ED - Eric D Knapp", 1 January 2011 (2011-01-01), INDUSTRIAL NETWORK SECURITY. SECURING CRITICAL INFRASTRUCTURE NETWORKS FOR SMART GRID, SCADA, AND OTHER INDURSTIAL CONTROL SYSTEMS, SYNGRESS, PAGE(S) 147 - 247, XP002687973, ISBN: 978-1-59749-645-2 * the whole document *

## Description

### Field of the invention

The invention is in the field of data security. More specifically, the invention relates to a system for detecting malicious programming of a PLC in SCADA system using programming time windows.

### Background of the invention

Supervisory Control and Data Acquisition (SCADA) systems are responsible for monitoring, managing and controlling the safe and efficient operation of systems responsible for basic infrastructure and industrial enterprises such as electricity, oil, gas production and distribution, water distribution, water and sewage treatment, chemical processes, traffic control, railroad signal light control, airport operations, food production, and controlling and monitoring systems such as lighting, heating, air conditioning and elevators in buildings.

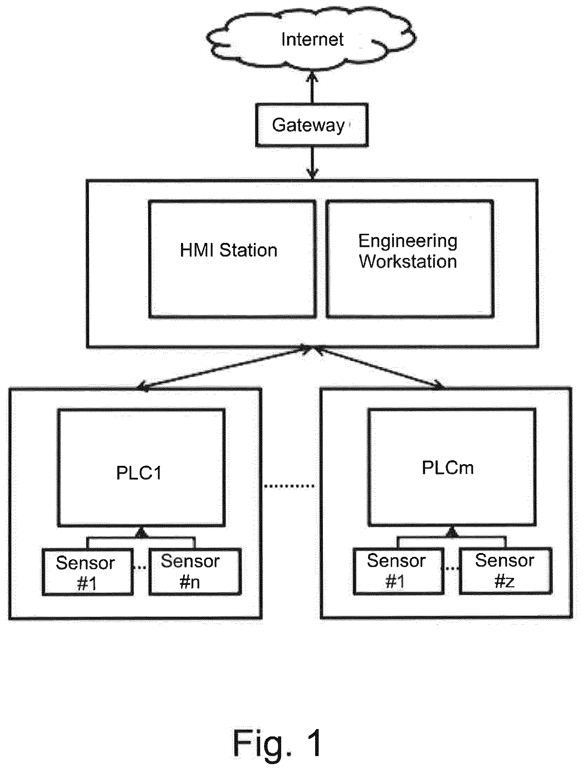

The basic architecture of SCADA systems is shown in Fig. 1. A SCADA system comprises the following main components:
- Human Machine Interface (HMI) -- A HMI is a workstation used by SCADA operators for the day to day operation and monitoring of the system. This workstation can be used to change set points (controlled values), stop or shutdown operation of one or more physical devices or the entire system, etc.
- Programmable Logic Controller (PLC) - A PLC is a small embedded microcomputer that can be programmed to control one or more physical devices.
- Remote Terminal Unit (RTU) - An RTU is a simpler, older form of PLC, used mainly for telemetry where no physical actuation of devices is needed.
- Engineering workstation - This is a workstation dedicated to programming the PLC devices used in the system. Re-programming the PLC can completely alter the behavior of the system. Doing so without the operators knowledge may put in jeopardy the system and the machines it controls.
- Historian - This is a dedicated server used to record all the timestamped activity in the system.

There are many differences between modern information technology (IT) systems and SCADA systems. The most relevant ones within the context of security are:
- Modern vs. Old - Most modern IT systems have a life cycle of several years, after which they undergo upgrades and improvements. By contrast, most SCADA systems have lifecycles of 20-30 years, because of costs and reliability considerations. This means that current production systems might have been planned and manufactured when the Internet was at infancy.
- Concentrated vs. Distributed - Most modern IT systems are located in special areas called Data Centers or Server Farms. SCADA systems on the other hand can be located almost anywhere, from deserts to the middle of the ocean, with various wire and wireless means of communication. This fact alone makes changing these systems prohibitively expensive.

- Patches - Most IT enterprises have learned to incorporate patch cycles, where they upgrade their systems for handling security vulnerabilities that have been found. By contrast, many SCADA operators don't upgrade their setups at all, because they either can't afford the downtime, or simply don't want to mess with a reliable system they currently use.
- Modern approach to security - Many IT systems have incorporated security measures, especially traffic control, encryption and authentication. Most SCADA systems do not use any such measures, usually because they are not supported or for reliability concerns. "Reliability first" means that the operators are anxious about any components that are not directly related to the smooth operation of the network and/or the systems, especially those that have pure security value and might prevent proper and immediate control of the system in an emergency.

Most security breaches we read about daily are focused around stealing information of various kinds - credit card numbers, Personally identifiable information (PII - is any data that could potentially identify a specific individual), trade secrets, engineering plans, national security info etc. Those attacks are known in military parlance as Computer Network Exploitation (CNE). This means that in many IT networks, confidentiality of the information on the network is paramount, and the operators top security priority is to support it. On the other hand, SCADA networks usually don't contain any secrets, and the main concern for the operators is the reliability of the system - its integrity and availability. Attacks against such systems will try to hurt the capability of the operators to monitor and control it, and may even try to physically hurt the actual machines controlled by the system. These attacks are known as Computer Network Attack (CNA).

The following are the main security issues with current SCADA systems:
- Internet connectivity - As shown in Fig. 1, many SCADA operators have connected their networks to the Internet or to Internet connected networks for efficiency's sake or maintenance consideration. But the security model for these SCADA networks was that of a standalone, unconnected network, and they are not prepared for the kind of threats that the modern Internet brings with it.
- Flat network design - The networks used are usually "flat", which means no segmentation or traffic control is used, for simplicity and reliability. The result is systems that the attacker has only to gain access to; when he is inside the network, the game is over for the defender.
- No, or limited implementation of security measures - As mentioned earlier, operators shun any equipment not directly responsible for operation of the systems, mainly because of reliability and economic considerations.

The main target of attacks in SCADA systems are the Programmable Logic Controller (PLCs), which are embedded microcomputers that can be programmed to control physical devices in SCADA systems. They receive information (e.g., status) from physical devices and forward the information to the operator, forward commands, sent by the operator via the Human-Machine Interface (HMI), to the physical devices, and can be reprogrammed through the Engineering WorkStation (EWS).

Existing threats to the PLC's are:
- maliciously re-programing a PLC in order to gain full control on the PLC;
- manipulating information provided by the PLC;
- sending false/malicious commands to the physical devices (e.g., stopping a turbine).

Many attacks against SCADA systems have been made public in the past. Unfortunately, in most cases the description of the attack is vague, with little or no technical details to help the security community understand the attacker's approach and devise specific countermeasures. One distinct exception to this rule is the attack known as STUXNET.

This attack was conducted against Iran's nuclear program, specifically against the Uranium enrichment facilities in Natanz. This attack was meticulously documented by experts, including the Langner Group from Germany and Symantec.

In many ways, this attack was the first of its kind - it tried to destroy the actual centrifuges connected to the control systems. It also used the very first known rootkit on the control system PLC. The attack vector was the engineering workstation. The attackers gained access to the engineering workstation and used it to change the programming of the PLC controlling the centrifuges. The rootkit functionality of the attack was used to hide these changes from the operators using the HMI or engineering workstation.

As this is a very powerful attack vector which upon successful reprogramming of the PLC allows the attacker full control over the system and also can dictate the level of visibility for the SCADA system operators (via the HMI), a proper security solution is necessary.

WEI GAO ET AL in "On SCADA control system command and response injection and intrusion detection",ECRIME RESEARCHERS SUMMIT (ECRIME), 2010, IEEE, 18 October 2010 (2010-10-18), pages 1-9, discloses a neural network based Intrusion Detection System (IDS) which monitors control system physical behaviour to detect injection attacks.

It is therefore a purpose of the present invention to provide a system that allows operators to detect and prevent malicious re-programming of PLCs in SCADA systems.

It is another object of the invention to provide a system that detects malicious re-programming of PLCs in SCADA systems using a dedicated TAP which collects all the activity in the communication line of the PLC and detects unauthorized reprogramming of the PLC.

Further purposes and advantages of this invention will appear as the description proceeds.

### Summary of the Invention

In one aspect the invention relates to a method for detecting malicious reprogramming of a Programmable Logic Controller (PLC) in a Supervisory Control And Data Acquisition (SCADA) according to claim 1.

In a second aspect the invention relates to a system for detecting malicious reprogramming of a Programmable Logic Controller (PLC) in a Supervisory Control And Data Acquisition system according to claim 8.

Further details of the invention are defined in the dependent claims.

All the above and other characteristics and advantages of the invention will be further understood through the following illustrative and non-limitative description of embodiments thereof, with reference to the appended drawings.

### Brief Description of the Drawings

- Fig. 1 schematically shows the main components of a typical SCADA system; and
- Fig. 2 schematically shows the system proposed by the present invention.

### Detailed Description of Embodiments of the Invention

The basic assumption behind the invention is that an attacker can already be on the Engineering Workstation (EWS) or any other location in the network and tries to send reprogramming files to the PLC or change/manipulate reprogramming files send by the administrator via the Engineering Workstation.

In order to make it much more difficult for an attacker to change the operation of a PLC and destroy equipment connected to it, in the present invention a dedicated device is installed, working in sniffing mode (e.g., Intrusion Detection System) on the communication path between the HMI/Engineering Workstation (EWS) and the PLC.

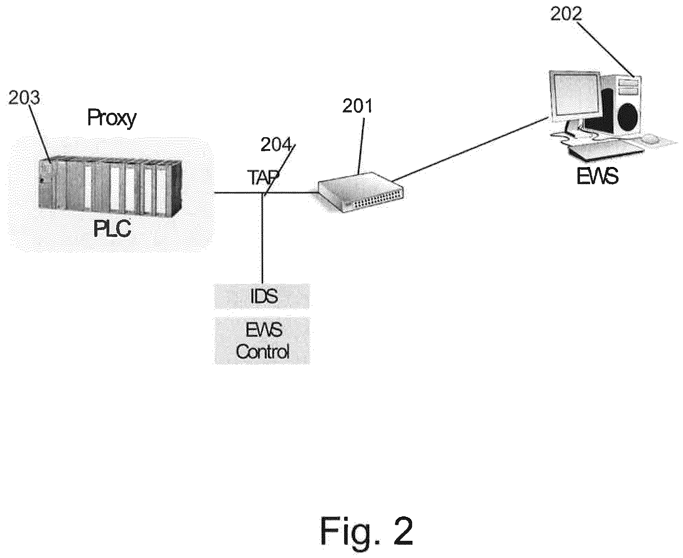

Fig. 2 schematically describes the system of the invention. A dedicated device 201 is installed on the communication network between Engineering Workstation 202, and PLC 203. Device 201 passively collects and checks traffic using a Test Access Point (TAP) 204 (a TAP is a passive splitting mechanism installed between a 'device of interest' and the network) and is considered as a passive duplication of Layer 1 (L1) traffic. The TAP 204 is transparent and cannot be detected from the attacker's point of view, while a port monitor (Switch Port Analyzer (SPAN) port, also known as a mirror port) can be detected by checking the switch's configuration of the communication infrastructure. This means that no active change or control of the communication path is made by device 201, satisfying reliability demands.

An attacker cannot use the TAP connectivity to access the device 201 and disrupt its operation. There is no way for the attacker, located on the SCADA network, to access this separate network. The device 201 is connected on the other side to the company's Security Information and Event Management System (SIEM), so it can directly alert when an unauthorized re-programming is detected. The IDS - Intrusion Detection System receives the traffic and search for reprogramming PLC patterns in the network traffic. When a pattern is detected, the IDS will send an alert to the SIEM system. The SIEM system presents it to the operator. For added security, this SIEM connectivity can use a one way data diode (i.e., a network appliance or device allowing data to travel only in one direction, used in guaranteeing information security), ensuring no network attack is possible on the device 201. The device 201 is controlled from a dedicated EWS Control module 202. It is possible to combine the functionality of the device 201 and control EWS Control module to a single device.

The device 201 identifies any traffic that tries to re-program the PLC, and raises an alert. In case where the PLC needs to be programmed the operator gives a specific command to the device 201, to ignore traffic that tries to re-program the PLC (i.e., by disabling the rule in the Intrusion Detection System). When finished programming the PLC, the operator will re-enable the device. Eventually the only vulnerable time window for the attacker is the time that the operator needs to program the PLC.

The need for turning on and off the alerts arises from the fact that the system is connected to the main SIEM system for the organization. As the organization is larger and distributed, the Security Operations Center (SOC) team simply cannot try and find the engineer responsible for the change, and thus authorized re-programming must have the alert turned off. The management of the device is handled from a dedicated Work Station, not connected in any way to the SCADA network.

This functionality of disabling the dedicated device for a limited and specific time window is named "time deception". An attacker that is not aware of this countermeasure and tries to change the programming of the PLCs in the system will be detected at once.

In addition, an OTP (One Time Password that is generated each time one wants to authenticate) token may be used to enable programming from the EWS to the PLC, either by locally opening access to the EWS or by sending a unique PIN code on the net, to be captured by the TAP and compared to the required PIN code in the "Guard" EWS.

Although the method of the present invention has been demonstrated on a honeypot sensor, it is noted that the same process and method can be implemented on a network telescope sensor, with minor adjustments that are obvious to a person skilled in the art.

As various embodiments have been described and illustrated, it should be understood that variations will be apparent to one skilled in the art without departing from the principles herein. Accordingly, the invention is not to be limited to the specific embodiments described and illustrated in the drawings.

## Claims

1. A method for detecting malicious reprogramming of a Programmable Logic Controller, PLC, in a Supervisory Control And Data Acquisition, SCADA, system, said method comprises the steps of:
a. locating a dedicated device on a communication network between said PLC and an Engineering Workstation;
b. passively collecting and checking, by said dedicated device, traffic between said PLC and said Engineering Workstation using a Test Access Point ,TAP, wherein an Intrusion Detection System, IDS, is connected to said traffic through said TAP such that there is no access to the IDS from said SCADA system;
c. detecting unauthorized reprogramming in said traffic by a time deception functionality of the Engineering Workstation, said time deception corresponding to the Engineering Workstation disabling the dedicated device for a limited and specific time window so that an attacker will be detected upon trying to reprogram the PLC; and
d. generating, by the dedicated device, an alert after detecting unauthorized reprogramming in said traffic.

2. The method according to claim 1, wherein the step of time deception is performed by effecting a countermeasure of disabling the dedicated device for a limited and specific time window, such that an attacker will be unaware of the countermeasure and will be detected upon trying to reprogram the PLC.

3. The method according to claim 2, wherein the dedicated device is disabled during performance of the countermeasure only when the PLC needs to be programmed by an operator.

4. The method according to claim 3, wherein a One Time Password (OTP) token is used to enable programming from the Engineering Workstation to the PLC.

5. The method according to claim 1, wherein the dedicated device is connected to a Security Information and Event Management System, SIEM, and the IDS generates the alert and sends it to the SIEM system after detecting unauthorized reprogramming in said traffic.

6. The method according to claim 1, which is implemented on a honeypot sensor.

7. The method according to claim 1, which is implemented on a network telescope sensor.

8. A system for detecting malicious reprogramming of a Programmable Logic Controller, PLC, in a Supervisory Control And Data Acquisition, SCADA, system, said detecting system comprising:
a. an Engineering Workstation which is dedicated to program said PLC; and
b. a dedicated device installed on a communication path between said PLC and said Engineering Workstation, for passively collecting and checking traffic between said PLC and said Engineering Workstation using a Test Access Point, TAP, for detecting unauthorized reprogramming and generating an alert, wherein an Intrusion Detection System, IDS, is connected through said TAP to said SCADA system so that there is no access to the IDS from said SCADA system,
wherein said Engineering Workstation has time deception functionality, being adapted to disable the dedicated device for a limited and specific time window so that an attacker will be detected upon trying to reprogram the PLC.

9. The system according to claim 8, further comprising a Security Information and Event Management System (SIEM) to which the dedicated device is connected, wherein the IDS is operable to generate the alert and to send it to the SIEM system after detecting unauthorized reprogramming in said traffic.

10. The system according to claim 9, further comprising a one way data diode used in conjunction with the SIEM system, ensuring no network attack is possible on said dedicated device.

## Patentansprüche

1. Verfahren zum Erkennen einer böswilligen Neuprogrammierung einer speicherprogrammierbaren Steuerung, SPS, in einem Supervisory Control And Data Acquisition, SCADA, System, wobei das Verfahren folgende Schritte umfasst:
a. Lokalisieren einer dedizierten Vorrichtung in einem Kommunikationsnetzwerk zwischen der SPS und einer Technischen Arbeitsstation;
b. passives Sammeln und Prüfen, durch die dedizierte Vorrichtung, des Verkehrs zwischen der SPS und der Technischen Workstation unter Verwendung eines Testzugriffspunkts, TAP, wobei ein Intrusion-Detection-System, IDS, durch den TAP mit dem Verkehr verbunden ist, so dass es keinen Zugriff auf das IDS von dem SCADA-System gibt;
c. Erkennen von nicht-autorisierter Umprogrammierung in dem Verkehr durch Zeittäuschungsfunktionalität der Technischen Workstation, wobei die Zeittäuschung der Deaktivierung des dedizierten Geräts durch die Technische Workstation für ein begrenztes und spezifisches Zeitfenster entspricht, so dass ein Angreifer beim Versuch, die SPS umzuprogrammieren, erkannt wird; und
d. Generieren, durch das dedizierte Gerät, einer Warnung, nachdem eine unbefugte Neuprogrammierung im besagten Verkehr festgestellt wurde.

2. Verfahren nach Anspruch 1, wobei der Schritt der Zeittäuschung durch Bewirken einer Gegenmaßnahme der Deaktivierung der dedizierten Vorrichtung für ein begrenztes und spezifisches Zeitfenster durchgeführt wird, so dass ein Angreifer sich der Gegenmaßnahme nicht bewusst ist und beim Versuch der Neuprogrammierung der SPS erkannt wird.

3. Verfahren nach Anspruch 2, wobei die dedizierte Vorrichtung während der Durchführung der Gegenmaßnahme nur dann deaktiviert wird, wenn die SPS von einem Bediener programmiert werden muss.

4. Verfahren nach Anspruch 3, bei dem ein One Time Password, OTP, Token verwendet wird, um die Programmierung von der Engineering Workstation zur SPS zu ermöglichen.

5. Verfahren nach Anspruch 1, wobei die dedizierte Vorrichtung mit einem Sicherheitsinformations- und Ereignisverwaltungssystem, SIEM, verbunden ist und das IDS den Alarm erzeugt und ihn an das SIEM-System sendet, nachdem es eine unbefugte Umprogrammierung im dem Verkehr festgestellt hat.

6. Verfahren nach Anspruch 1, das auf einem Honeypot-Sensor implementiert ist.

7. Ein Verfahren nach Anspruch 1, das auf einem Netzwerk-Teleskopsensor implementiert ist.

8. System zum Erkennen einer böswilligen Umprogrammierung einer speicherprogrammierbaren Steuerung, SPS, in einem Supervisory Control And Data Acquisition, SCADA, System, wobei das Erkennungssystem umfasst:
a. eine Technische Workstation, die zur Programmierung der SPS bestimmt ist; und
b. eine dedizierte Vorrichtung, die auf einem Kommunikationspfad zwischen der SPS und der technischen Arbeitsstation installiert ist, zum passiven Sammeln und Prüfen von Verkehr zwischen der SPS und der technischen Arbeitsstation unter Verwendung eines Testzugriffspunkts, TAP, zum Erkennen unbefugter Umprogrammierung und zum Erzeugen einer Warnung, wobei ein Einbruchserkennungssystem, IDS, über den TAP mit dem SCADA-System verbunden ist, so dass es keinen Zugriff auf das IDS von dem SCADA-System aus gibt,
wobei die Technische Workstation über eine Zeittäuschungsfunktionalität verfügt, die so angepasst ist, dass sie das dedizierte Gerät für ein begrenztes und spezifisches Zeitfenster deaktiviert, so dass ein Angreifer beim Versuch, die SPS umzuprogrammieren, erkannt wird.

9. System nach Anspruch 8, das ferner ein Sicherheitsinformations- und Ereignisverwaltungssystem, SIEM, umfasst, mit dem die dedizierte Vorrichtung verbunden ist, wobei das IDS so betreibbar ist, dass es den Alarm erzeugt und ihn an das SIEM-System sendet, nachdem es eine unbefugte Umprogrammierung in dem Verkehr erkannt hat.

10. System nach Anspruch 9, das ferner eine Einweg-Daten-Diode aufweist, die in Verbindung mit dem SIEM-System verwendet wird und sicherstellt, dass kein Netzwerkangriff auf die dedizierte Vorrichtung möglich ist.

## Revendications

1. Procédé permettant de détecter la reprogrammation malveillante d'un contrôleur logique programmable, PLC (*programmable logic controller*)*,* dans un système de commande de surveillance et d'acquisition de données, SCADA (*supervisory control and data acquisition*)*,* ledit procédé comprend les étapes consistant à :
a. positionner un dispositif dédié sur un réseau de communication entre ledit contrôleur PLC et une station de travail d'ingénierie ;
b. collecter et contrôler passivement, au moyen dudit dispositif dédié, le trafic entre ledit contrôleur PLC et ladite station de travail d'ingénierie, à l'aide d'un point d'accès pour les essais, TAP (*test access point*)*,* dans lequel un système de détection d'intrusion, IDS (*intrusion détection system*) est connecté audit trafic par le biais dudit point TAP, de manière qu'il n'existe pas d'accès au système IDS depuis ledit système SCADA ;
c. détecter une reprogrammation non autorisée dans ledit trafic, au moyen d'une fonctionnalité de déception temporelle de la station de travail d'ingénierie, ladite déception temporelle correspondant à la désactivation par la station de travail d'ingénierie du dispositif dédié pendant une fenêtre temporelle limitée et spécifique, de manière qu'un attaquant soit détecté lors de sa tentative de reprogrammation du contrôleur PLC ; et
d. déclencher, au moyen du dispositif dédié, une alerte après la détection d'une reprogrammation non autorisée dans ledit trafic.

2. Procédé selon la revendication 1, dans lequel l'étape de déception temporelle est effectuée par réalisation d'une contre-mesure consistant à désactiver le dispositif dédié pendant une fenêtre temporelle limitée et spécifique, de manière qu'un attaquant n'ait pas conscience de la contre-mesure et soit détecté lors de sa tentative de reprogrammation du contrôleur PLC.

3. Procédé selon la revendication 2, dans lequel le dispositif dédié n'est désactivé au cours de la réalisation de la contre-mesure que lorsque le contrôleur PLC nécessite d'être programmé par un opérateur.

4. Procédé selon la revendication 3, dans lequel un jeton de production de mots de passe à usage unique (OTP, *one-time passwords*) est utilisé pour permettre la programmation, de la station de travail d'ingénierie vers le contrôleur PLC.

5. Procédé selon la revendication 1, dans lequel le dispositif dédié est connecté à un système de gestion des informations et des événements de sécurité, SIEM (*security information and event management system*)*,* et le système IDS déclenche l'alerte et l'envoie au système SIEM après la détection d'une reprogrammation non autorisée dans ledit trafic.

6. Procédé selon la revendication 1, qui est mis en œuvre sur un détecteur de type pot de miel.

7. Procédé selon la revendication 1, qui est mis en œuvre sur un détecteur de type télescope réseau.

8. Système permettant de détecter la reprogrammation malveillante d'un contrôleur logique programmable, PLC, dans un système de commande de surveillance et d'acquisition de données, SCADA, ledit système de détection comprenant :
a. une station de travail d'ingénierie qui est dédiée à la programmation dudit contrôleur PLC ; et
b. un dispositif dédié, installé sur un trajet de communication entre ledit contrôleur PLC et ladite station de travail d'ingénierie, pour collecter et contrôler passivement le trafic entre ledit contrôleur PLC et ladite station de travail d'ingénierie, à l'aide d'un point d'accès pour les essais, TAP, afin de détecter une reprogrammation non autorisée et de déclencher une alerte, dans lequel un système de détection d'intrusion, IDS, est connecté par le biais dudit point TAP audit système SCADA, de manière qu'il n'existe pas d'accès au système IDS depuis ledit système SCADA,
dans lequel ladite station de travail d'ingénierie possède une fonctionnalité de déception temporelle, conçue pour désactiver le dispositif dédié pendant une fenêtre temporelle limitée et spécifique, de manière qu'un attaquant soit détecté lors de sa tentative de reprogrammation du contrôleur PLC.

9. Système selon la revendication 8, comprenant en outre un système de gestion des informations et des événements de sécurité (SIEM), auquel le dispositif dédié est connecté, dans lequel le système IDS permet de déclencher l'alerte et de l'envoyer au système SIEM après la détection d'une reprogrammation non autorisée dans ledit trafic.

10. Système selon la revendication 9, comprenant en outre une diode unidirectionnelle de données, utilisée conjointement avec le système SIEM, garantissant qu'aucune attaque de réseau n'est possible sur ledit dispositif dédié.
